# EUROPEAN PATENT SPECIFICATION

(11) **EP 3 923 271 B1**
(45) Date of publication and mention of the grant of the patent: **28.08.2024**
(21) Application number: 21204103.2
(22) Date of filing: 22.10.2021
(51) Int. Cl.: G10L 13/00, B60R 16/037, G01C 21/36, G10L 15/22, G10L 13/04, H04L 67/60, G10L 15/00, G10L 19/005

(54) **VOICE CONTROL METHOD, VEHICLE, SERVER AND STORAGE MEDIUM**
SPRACHSTEUERUNGSVERFAHREN, FAHRZEUG, SERVER UND SPEICHERMEDIUM
PROCÉDÉ DE CONTROLE VOCALE, VÉHICULE, SERVEUR ET SUPPORT D'ENREGISTREMENT

(30) Priority: 22.06.2021 CN 202110690389
(43) Date of publication of application: 15.12.2021
(73) Proprietor: Guangzhou Xiaopeng Motors Technology Co., Ltd., Guangzhou 510000 (CN)
(72) Inventor: GUO, Huapeng, Guangzhou (CN); ZHANG, Yan, Guangzhou (CN); LI, Zhihao, Guangzhou (CN)
(74) Representative: Ran, Handong

(56) References cited:
- EP-A1- 3 321 927
- US-A1- 2005 108 249
- US-A1- 2012 253 823

## Description

### Field of Invention

The present invention relates to voice technology, and in particular, to a voice control method, vehicle, server and storage medium.

### Background

In related art, vehicles generally realize human-machine interaction through TTS (Text to Speech) technology. Typically, when a voice response to a user is required, a vehicle may first play an online synthesized audio file, because online synthesized audio files offer a voice of fine quality with sweetness and emotions.

In the case of bad network conditions, however, interactions via the network are more prone to take longer time, which may easily result in a long time for the vehicle to receive a complete audio file from the server end. At this point, the vehicle will synthesize an audio file offline. However, the audio provided to the user by the audio file synthesized offline has low sound quality, affecting the user experience.

EP 3 321 927 A1 describes a voice interaction method, which includes acquiring a voice utterance signal representative of an uttered voice V0, and acquiring a response signal representative of a response voice V2 responsive to a content of the uttered voice V0 identified by voice recognition of the voice utterance signal V0. The voice interaction method also includes supplying the response signal to a voice player, to have the response voice V2 played by the voice player, and supplying an interjection signal representative of interjection voice V1 to the voice player, to have the interjection voice V1 played by the voice player during a wait period Q that starts from an end point tA of the uttered voice V0 and ends at a start of playback of the response voice V2.

US 2005/108249 A1 discloses a method of delivering vehicle owner's manual or other vehicle-specific information to the vehicle operator from a remote data center and associated vehicle information database by utilizing a voice recognition system at the remote data center and delivering the information to the vehicle operator in audible speech. The vehicle operator speaks his request in the vehicle and the data center recognizes the request, perhaps asks more questions, leads the vehicle operator through a spoken menu, and then provides the answer vocally to the vehicle operator over the speaker(s) located in the vehicle. The method includes methodology for obtaining vehicle diagnostic information and controlling certain vehicle functions automatically via an embedded telematics control unit. The method further includes remote telephone access outside the vehicle.

US 2012/253823 A1 discloses a system and method for implementing a server-based speech recognition system for multi-modal automated interaction in a vehicle. The method includes receiving, by a vehicle driver, audio prompts by an on-board human-to-machine interface and a response with speech to complete tasks such as creating and sending text messages, web browsing, navigation, etc. This service-oriented architecture is utilized to call upon specialized speech recognizers in an adaptive fashion. The human-to-machine interface enables completion of a text input task while driving a vehicle in a way that minimizes the frequency of the driver's visual and mechanical interactions with the interface, thereby eliminating unsafe distractions during driving conditions. After the initial prompting, the typing task is followed by a computerized verbalization of the text. Subsequent interface steps can be visual in nature, or involve only sound.

### Summary of Invention

A voice control method, vehicle, server and storage medium are provided according to embodiments of the present invention. Aspects of the present invention are set out in the accompanying claims.

In accordance with the present invention, the voice interaction method includes:
acquiring and transmitting a voice command to a server by a vehicle terminal;
processing, by the server, the voice command to obtain a corresponding response audio file, determining latency data based on a vehicle scene, and sending the latency data to the vehicle terminal, wherein the latency data includes data indicating whether the vehicle terminal needs to adjust a default waiting period for the response audio file and an adjustment value;
performing, by the vehicle terminal, network prediction to obtain a prediction result, wherein the vehicle terminal performs the network prediction through a service heartbeat mechanism;
determining, by the vehicle terminal, a waiting period based on the latency data and the prediction result;
performing, by the vehicle terminal, a synthesis operation for the response audio file and playing the synthesized response audio file, when complete data of the response audio file transmitted by the server is not received within the waiting period;
playing, by the vehicle terminal, the response audio file transmitted from the server when the complete data of the response audio file transmitted by the server is received within the waiting period.

Determining the latency data based on the vehicle scene and sending the latency data to the vehicle terminal comprises:
processing, by the server, the voice command to obtain corresponding request text data;
when the request text data contains a preset keyword, determining by the server that the vehicle scene is a time-insensitive scene and determining the latency data as data indicating that the vehicle terminal needs to adjust the default waiting period for the response audio file and a first adjustment value;
when the request text data does not contain a preset keyword, determining by the server that the vehicle scene is a time-sensitive scene and determining the latency data as data indicating that the vehicle terminal does not need to adjust the default waiting period for the response audio file.

Determining the latency data based on the vehicle scene and sending the latency data to the vehicle terminal comprises:
determining, by the server, the vehicle scene based on a vehicle speed;
when the vehicle speed is less than a preset threshold, determining by the server that the vehicle scene is a time-insensitive scene and determining the latency data as data indicating that the vehicle terminal needs to adjust the default waiting period for the response audio file and a second adjustment value;
when the vehicle speed is not less than a preset threshold, determining by the server that the vehicle scene is a time-sensitive scene and determining the latency data as data indicating that the vehicle terminal does not need to adjust the default waiting period for the response audio file.

The prediction result comprises a strong network state and a weak network state, and determining the waiting period based on the latency data and the prediction result comprises:
determining, by the vehicle terminal, the waiting period as the default waiting period, in case of the strong network state;
determining, by the vehicle terminal, the waiting period based on the latency data, in case of the weak network state and the latency data being data indicating that the vehicle terminal needs to adjust the default waiting period for the response audio file and the adjustment value;
determining, by the vehicle terminal, the waiting period as the default waiting period, in case of the weak network state and the latency data indicating that the vehicle terminal does not need to adjust the default waiting period for the response audio file.

The voice control method comprises:
processing, by the server, the voice command to obtain a natural language processing result, synthesizing the response audio file based on the natural language processing result and sending a synthesis start indicator to the vehicle terminal, and sending a synthesis completion indicator to the vehicle terminal upon completion of the synthesis of the response audio file;
performing, by the vehicle terminal, the network prediction upon receipt of the synthesis start indicator;
determining, by the vehicle terminal, that the complete data of the response audio file transmitted by the server is not received when the synthesis completion indicator is not received within the waiting period;
determining, by the vehicle terminal, that the complete data of the response audio file transmitted by the server is received when the synthesis completion indicator is received within the waiting period.

Performing by the vehicle terminal the network prediction through the service heartbeat mechanism comprises:
sending, by the vehicle terminal, a request message to the server at a preset frequency;
determining, by the vehicle terminal, the prediction result as a weak network state when a response message sent by the server is not received within a specified period of time;
determining, by the vehicle terminal, the prediction result as a strong network state when a response message sent by the server is received within the specified period of time.

In accordance with the invention, the vehicle includes: a vehicle body, and
a vehicle terminal mounted on the vehicle body and configured to:
acquire a voice command and transmit the voice command to a server, such that the server processes the voice command to obtain a corresponding response audio file;
receive latency data determined by the server based on a vehicle scene, wherein the latency data includes data indicating whether the vehicle terminal needs to adjust a default waiting period for the response audio file and an adjustment value;
perform, through a service heartbeat mechanism, network prediction to obtain a prediction result;
   determine a waiting period based on the latency data and the prediction result;
   perform a synthesis operation for the response audio file and play the synthesized response audio file, when complete data of the response audio file transmitted by the server is not received within the waiting period;
   play the response audio file transmitted from the server when the complete data of the response audio file transmitted by the server is received within the waiting period.

In accordance with the invention, the server is configured to:
obtain a voice command transmitted from a vehicle terminal; and process the voice command to obtain a corresponding response audio file;
determine latency data based on a vehicle scene; and send the latency data to the vehicle terminal, such that the vehicle terminal determines a waiting period based on the latency data and a prediction result from network prediction performed by the vehicle terminal, wherein the latency data includes data indicating whether the vehicle terminal needs to adjust a default waiting period for the response audio file and an adjustment value;

The present invention further provides a computer-readable storage medium having stored thereon a computer program that, when executed by a processor, implements any one of the embodiments of the voice control method.

In the voice control method, vehicle, server and computer-readable storage medium, the server determines the latency data depending on the vehicle scene. The vehicle terminal can determine, based on the latency data and the network prediction result, the waiting period for the response audio file transmitted by the server. Time tolerance for the vehicle terminal to receive data from the server can be improved for different vehicle scenes and network states. The server can intervene in specific scenes, which enables service flexibility and dynamic adjustment of response latency of a response audio, thereby reducing offline frequency under poor network states and improving user experience.

Additional aspects and advantages of the present invention will be set forth in the description below, and will become apparent from the description, or can be understood by practice of the present invention.

### Brief Description of Drawings

The above and/or additional aspects and advantages of the present invention will become apparent and readily understood from the following description of the embodiments in connection with the accompanying drawings, in which:
FIG. 1 is a flow chart of a voice control method according to the present invention;
FIG. 2 illustrates modules for a voice control method according to the present invention;
FIG. 3 is another flow chart of a voice control method according to the present invention;
FIG. 4 is yet another flow chart of a voice control method according to the present invention;
FIG. 5 is still another flow chart of a voice control method according to the present invention;
FIG. 6 is still another flow chart of a voice control method according to the present invention;
FIG. 7 illustrates an application scenario of a voice control method according to the present invention;
FIG. 8 is a schematic diagram of the structure of a vehicle according to the present invention.

### Detailed Description

The embodiments of the present invention will be described in detail below, examples of which are illustrated in the accompanying drawings, in which like or similar numerals denote like or similar elements or elements having like or similar functions throughout. The embodiments described below with reference to the drawings are illustrative only and are not to be construed as limiting the present invention.

In the description of the embodiments of the present invention, the terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of' or "multiple" means two or more.

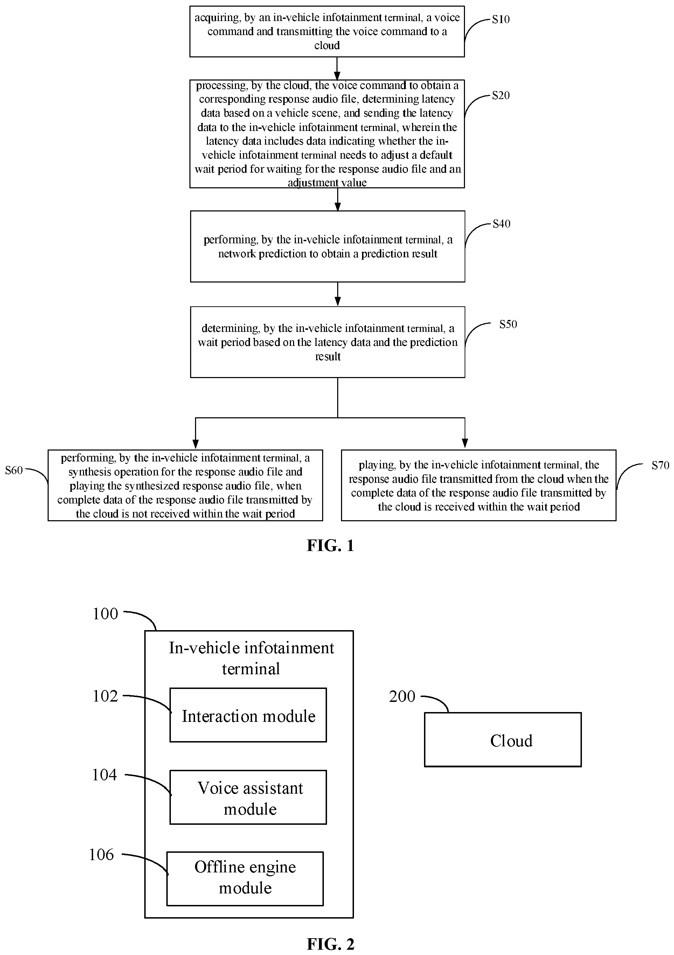

Referring to FIG. 1 and FIG. 2, the present invention provides a voice control method, which includes:
step S10, acquiring and transmitting a voice command to a server 200 by a vehicle terminal;
step S20, processing, by the server 200, the voice command to obtain a corresponding response audio file, determining latency data based on a vehicle 400 condition, and sending the latency data to the vehicle terminal 100, wherein the latency data includes data indicating whether the vehicle terminal 100 needs to adjust a default waiting period for the response audio file and an adjustment value;
step S40, performing, by the vehicle terminal 100, network prediction to obtain a prediction result;
step S50, determining, by the vehicle terminal 100, a waiting period based on the latency data and the prediction result;
step S60, performing, by the vehicle terminal 100, a synthesis operation for the response audio file and playing the synthesized response audio file, when complete data of the response audio file transmitted by the server 200 is not received within the waiting period;
step S70, playing, by the vehicle terminal 100, the response audio file transmitted from the server 200 when the complete data of the response audio file transmitted by the server 200 is received within the waiting period.

In the voice control method described above, the server 200 determines the latency data depending on the vehicle scene. The vehicle terminal 100 can determine, based on the latency data and the prediction result, the waiting period for the response audio file transmitted by the server 200. Time tolerance for the vehicle terminal 100 to receive data from the server 200 can be improved for different vehicle scenes and network states. The server 200 can intervene in specific scenes, which enables service flexibility and dynamic adjustment of response latency of a response audio, thereby reducing offline frequency under poor network states and improving user experience.

In particular, in voice control methods in related arts, a vehicle terminal obtains a voice command and transmits it to a server, and the server processes the voice command to obtain a corresponding response audio file. However, it takes a certain amount of time for the server to obtain the corresponding response audio file and send it to the vehicle terminal. In order to avoid the long time that the vehicle terminal waits for the response audio file sent from the server, which affects the user experience, the vehicle terminal sets a default waiting period. If the response audio file synthesized by the server is received within the default waiting period, the vehicle terminal will play this response audio file. Otherwise, the vehicle terminal performs offline synthesis and plays a response audio file synthesized offline. However, different vehicle scenes require different waiting periods on the vehicle terminal. For example, the vehicle terminal may accept a high time tolerance for receiving data from the server in situations such as a user asking for weather conditions on the day or alerting for congestion ahead.

An example is given below to provide better understanding. In the invention, the user asks, "what is the weather like today". The vehicle terminal 100 acquires the voice command of "what is the weather like today" and transmits it to the server 200. It takes 3000ms for the server 200 to process the voice command of "what is the weather like today" to obtain a corresponding response audio file with "it is warm today". The default waiting period for the vehicle terminal 100 is 2000ms. Upon receiving the voice command of "what is the weather like today", the server 200 determines, from the vehicle 400 scene, the latency data as that the default waiting period of 2000ms needs to be adjusted and the adjustment value is 4000ms. The vehicle terminal 100 determines that the waiting period is 4000ms based on the latency data and the prediction result, and then the vehicle terminal 100 may receive the response audio file with "it is warm today" sent by the server 200 within the waiting period of 4000ms and play "it is warm today".

In particular, the vehicle terminal 100 may be mounted on a vehicle 400. The vehicle terminal 100 may be fixedly mounted on the vehicle 400, or the vehicle terminal 100 may also be removably mounted to the vehicle 400. The way of mounting of the vehicle terminal 100 is not limited herein. The vehicle 400 includes, but not limited to, a fuel vehicle, extended-range electric vehicle, electric vehicle, hybrid vehicle, hydrogen energy vehicle, and the like.

The server 200 may be in wired or wireless connection with the vehicle terminal 100 for data and signal transmission. The wireless connection includes, but not limited to, WIFI, a mobile communication network, etc. The mobile communication network may include mobile communication means, such as 4G, 5G, and 6G.

The server 200 can perform natural language processing on the voice command, and then provide response text data corresponding to the result of the natural language processing. In an embodiment, the server 200 may include the TTS (Text To Speech) server. The TTS server may be a server of a vehicle manufacturer or other server, which includes but not limited to a server for processing response wording and synthesizing response audio files.

The vehicle terminal 100 may include an interaction module 102, a voice assistant module 104, and an offline engine module 106, as shown in FIG. 2.

The interaction module 102 may include a display screen configured to display a graphical user interface, such as a control panel interface, a navigation interface, a music interface and the like. The display screen may be a touch display screen. In addition to displaying a graphical user interface associated with the vehicle terminal, the touch display screen provides means for user input. A user inputs a command by touching an associated key on the touch display screen or by inputting an associated gesture. In an embodiment, the display screen may include at least one of a central control display screen, an instrument display screen, and a passenger seat display screen, and an entertainment screen on the back of the driver seat and the passenger seat of the vehicle 400. The user may input a relevant command through a key on the vehicle 400 or through a voice, to have the desired graphical user interface to be displayed. The display screen can also display text content of a response audio file, and the words can be displayed synchronously with the words in the playback of the audio.

The voice assistant module 104 is configured to collect a voice from a user, generate a voice command, and play an audio. For example, the voice assistant module 104 may have a microphone and a speaker. The voice assistant module 104 collects a user's voice through the microphone and generates a voice command, and transmits it to the interaction module 102 to upload to the server 200. The server 200 performs natural language processing on the voice command to obtain a corresponding operation instruction and response text data. The voice assistant module 104 may play the response audio file using the speaker.

The offline engine module 106 is configured to synthesize a response audio file offline for playback by the voice assistant module 104, when the vehicle terminal 100 does not receive the complete data of a response audio file transmitted from the server 200 for more than the waiting period.

It should be noted that the step S30 may be performed before the step S40, or the step S40 may be performed before the step S30, or the step 30 and the step 40 may be performed simultaneously. The order of execution of step S30 and step S40 is not limited herein.

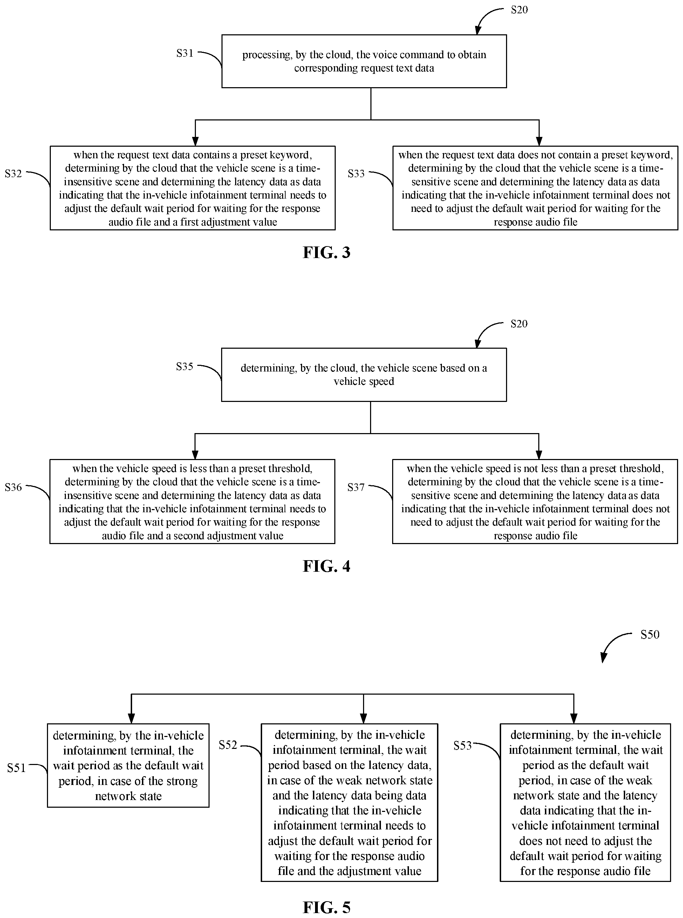

Referring to FIG. 3, the step S20 includes:
step S31, processing, by the server 200, the voice command to obtain corresponding request text data;
step S32, when the request text data contains a preset keyword, determining by the server 200 that the vehicle scene is a time-insensitive scene and determining the latency data as data indicating that the vehicle terminal 100 needs to adjust the default waiting period for the response audio file and a first adjustment value;
step S33, when the request text data does not contain a preset keyword, determining by the server 200 that the vehicle scene is a time-sensitive scene and determining the latency data as data indicating that the vehicle terminal 100 does not need to adjust the default waiting period for the response audio file.

In this way, the server 200 can determine whether the vehicle scene is a time-sensitive scene or a time-insensitive scene by determining whether the request text data contains the preset keyword. The server 200 thus determines the latency data based on the vehicle scene, which provides a basis for determining the waiting period.

In particular, the voice command may be an audio with user command content. The server 200 can perform natural language processing on the voice command, and then provide response text data corresponding to the result of the natural language processing. For example, in an embodiment of the invention, the voice command is an audio having the user command content of "turn on the air conditioner". The server 200 performs natural language processing on the voice command and obtains a natural language processing result of "turn on the air conditioner". The server 200 then provides the response text data of "okay, it has been turned on for you" corresponding to the natural language processing result of "turn on the air conditioner". The server 200 may also issue an operation instruction for turning on the air conditioner to the vehicle terminal 100 based on the voice command, such that the vehicle terminal 100 controls the air conditioner of the vehicle 400 to be turned on.

There are many types of preset keywords. As an example, in an embodiment, the preset keyword is "traffic tied up area". Therefore, when the response text data contains "you are about to enter a traffic tied up area, please slow down", the vehicle scene is determined to be a time-insensitive scene, and the latency data is thus determined to be data indicating that the default waiting period for the vehicle terminal 100 to wait for the response audio file should be adjusted and that the first adjustment value to be adjusted to is 4000ms. As another example, in an embodiment, the preset keywords include "weather" and "warm". Therefore, when the response text data contains "it is warm today", the vehicle scene is determined to be a time-insensitive scene, and the latency data is thus determined to be data indicating that the default waiting period for the vehicle terminal 100 to wait for the response audio file should be adjusted and that the first adjustment value to be adjusted to is 5000ms.

It should be noted that there can be various time-insensitive scenes. For example, when the user asks about the weather, the time-insensitive scene may include a weather related time-insensitive scene. For another example, when there is congestion ahead, the time-insensitive scene may include a congestion triggered time-insensitive scene. Different time-insensitive scenes may be set for different preset keywords, and different first adjustment values may be set for different time-insensitive scenes. Different time-insensitive scenes may be set for different preset keywords, while a same first adjustment value may be for different time-insensitive scenes. A same time-insensitive scene may also be set for different preset keywords, thereby determining a same first adjustment value. The specific settings of the time-insensitive scenes and the adjustment values for the keywords are not limited herein.

The preset keywords can be set by the manufacturer as factory settings, or can be set by users, and can also be updated and maintained by the manufacturer during services. The ways for setting keywords are not limited herein.

In an example, the server 200 may include a central control server. The central control server may be a server of a vehicle manufacturer, which includes but not limited to a server for performing natural language processing.

Referring to FIG. 4, the step S20 includes:
step S35, determining by the server 200 the vehicle scene based on a vehicle speed;
step S36, when the vehicle speed is less than a preset threshold, determining by the server 200 that the vehicle scene is a time-insensitive scene and determining the latency data as data indicating that the vehicle terminal 100 needs to adjust the default waiting period for the response audio file and a second adjustment value;
step S37, when the vehicle speed is not less than the preset threshold, determining by the server 200 that the vehicle scene is a time-sensitive scene and determining the latency data as data indicating that the vehicle terminal 100 does not need to adjust the default waiting period for the response audio file.

In this way, the server 200 determines if the vehicle scene is a time-sensitive scene or a time-insensitive scene based on the vehicle speed of the vehicle. The server 200 then determines the latency data based on the vehicle scene, which provides a basis for determining the waiting period.

In particular, the preset threshold can be set based on simulations, empirical values, and the like, and may be, but not limited to, 5km/h, 6km/h, 7km/h, 8km/h, 9km/h, 10km/h, 15km/h, 20km/h, or 30km/h.

The second adjustment value can be set according to the value of the preset threshold, the data obtained by the manufacturer from simulation or empirical values, preferences of users, or the like. The second adjustment value may be set by the manufacturer, or may be set by users, or may also be set by maintenance personnel, which is not limited herein.

It should be noted that, in case of both the first adjustment value and the second adjustment value, the adjustment value of the latency data may be obtained by such as adding, multiplying, averaging, taking the maximum of, or taking the minimum of the two adjustment values. When there is only the first adjustment value but not the second adjustment value, the adjustment value of the latency data is set to the first adjustment value. When there is only the second adjustment value but not the first adjustment value, the adjustment value of the latency data is set to the second adjustment value. When there is neither the first adjustment value nor the second adjustment value, namely, the vehicle scene is a time-insensitive scene, the latency data is set to the default waiting period.

Referring to FIG. 5, the prediction result includes a strong network state and a weak network state, and the step S50 includes:
step S51, determining by the vehicle terminal 100 the waiting period as the default waiting period, in case of the strong network state;
step S52, determining by the vehicle terminal 100 the waiting period based on the latency data, in case of the weak network state and the latency data being data indicating that the vehicle terminal 100 needs to adjust the default waiting period for the response audio file and the adjustment value;
step S53, determining by the vehicle terminal 100 the waiting period as the default waiting period, in case of the weak network state and the latency data indicating that the vehicle terminal 100 does not need to adjust the default waiting period for the response audio file.

In this way, the vehicle terminal 100 can determine whether to determine the waiting period based on the latency data or determine the waiting period as the default waiting period depending on whether the prediction result is the strong network state or the weak network state.

Specifically, when the prediction result is the strong network state, it will take a short time for the server 200 to send the corresponding response audio file obtained by processing the voice command to the vehicle terminal 100. In the strong network state, generally, the vehicle terminal 100 can receive the response audio file synthesized by the server 200 within the default waiting period. When the prediction result is the weak network state, it will take a long time for the server 200 to send the corresponding response audio obtained by processing the voice command to the vehicle terminal 100 and it is difficult to predict how long it will take. Thus, when the latency data includes data indicating that the vehicle terminal 100 needs to adjust the default waiting period for the audio file and the adjustment value, the vehicle terminal 100 determines the waiting period based on the latency data. This, on the one hand, can increase the probability of using the response audio file synthesized by the server 200, and on the other hand, can avoid the poor user experience caused by the long time for the vehicle terminal 100 to wait for the response audio file synthesized by the server 200. When the prediction result is the weak network state and the latency data indicating that the vehicle terminal 100 does not need to adjust the default waiting period for the response audio file, i.e., a weak network state and a situation not with high tolerance for response time, the waiting period is determined as the default waiting period to prevent the user from waiting too long.

It should be noted that, because the prediction result is the strong network state, there is no need to consider the latency data. Therefore, it is possible to determine the prediction result first and then the latency data. It is also possible to determine the time latency data first and then the prediction result. It is further possible to determine the latency data and the prediction result synchronously.

The voice control method comprises:
step S81, processing by the server 200 the voice command to obtain a natural language processing result, and synthesizing the response audio file based on the natural language processing result and sending a synthesis start indicator to the vehicle terminal 100, and sending a synthesis completion indicator to the vehicle terminal 100 upon completion of the synthesis of the response audio file;
step S83, performing by the vehicle terminal 100 the network prediction upon receipt of the synthesis start indicator;
step S85, determining by the vehicle terminal 100 that the complete data of the response audio file transmitted by the server 200 is not received when the synthesis completion indicator is not received within the waiting period;
step S87, determining by the vehicle terminal 100 that the complete data of the response audio file transmitted by the server 200 is received when the synthesis completion indicator is received within the waiting period.

In this way, the vehicle terminal 100 can start to perform network prediction based on the synthesis start indicator. This allows the result of the network prediction to be more similar to the state of the network when the server 200 synthesizes and transmits the response audio file, thereby improving the extent to which the network prediction reflects the actual network state. In addition, the vehicle terminal can also determine whether the vehicle terminal 100 receives the complete data of the response audio file within the waiting period depending on whether the synthesis completion indicator is received within the waiting period. This provides a basis for whether to play the response audio file synthesized by the server 200, and provides a basis for whether to perform the synthesis of a response audio file and play the synthesized response audio file.

It should be noted that the step S20 includes the step S81. That is, the process of processing by the server 200 the voice command to obtain a corresponding response audio file may include: processing by the server 200 the voice command to obtain a natural language processing result, synthesizing the response audio file based on the natural language processing result and sending a synthesis start indicator to the vehicle terminal 100, and sending a synthesis completion indicator to the vehicle terminal 100 upon completion of the synthesis of the response audio file. The step S40 can include the step S83. That is, the process of performing by the vehicle terminal 100 the network prediction may include: performing by the vehicle terminal 100 the network prediction upon receipt of the synthesis start indicator. The step S60 can include the step S85, i.e., determining by the vehicle terminal 100 that the complete data of the response audio file transmitted by the server 200 is not received when the synthesis completion indicator is not received within the waiting period; and performing the synthesis of the response audio file. The step S70 can include the step S87, i.e., determining by the vehicle terminal 100 that the complete data of the response audio file transmitted by the server 200 is received when the synthesis completion indicator is received within the waiting period; and playing the response audio file.

The step S40 includes:
step S41, performing, by the vehicle terminal 100, network prediction through a service heartbeat mechanism.

In this way, the vehicle terminal 100 performs network prediction using the service heartbeat mechanism to obtain a prediction result, which provides a basis for determining the waiting period.

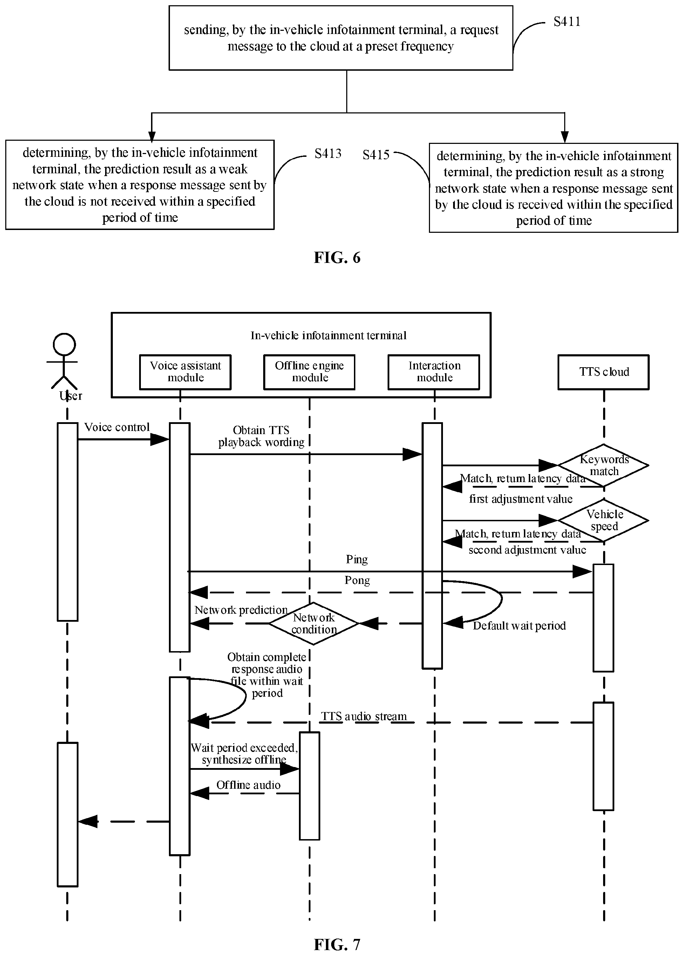

Specifically, referring to FIG. 6, the step S41 includes:
step S411, sending, by the vehicle terminal 100, a request message to the server 200 at a preset frequency;
step S413, determining, by the vehicle terminal 100, the prediction result as a weak network state when a response message sent by the server 200 is not received within a specified period of time;
step S415, determining, by the vehicle terminal 100, the prediction result as a strong network state when the response message sent by the server 200 is received within the specified period of time.

In this way, the vehicle terminal 100 sends the request message to the server 200 at the preset frequency. The server 200 sends the response message to the vehicle terminal 100 after receiving the request message. A determination is made as to whether the vehicle terminal 100 receives the response message within the specified period of time. If the response message is not received within the specified period of time, it means that the process of sending the request message from the vehicle terminal 100 to the server 200 or the process of sending the response message from the server 200 to the vehicle terminal 100 is delayed due to network states. If the vehicle terminal 100 receives the response message within the specified period of time, it means that the network is in a good state, and that the process of sending the request message from the vehicle terminal 100 to the server 200 or the process of sending the response message from the server 200 to the vehicle terminal 100 is completed smoothly.

It should be noted that the specific value of the specified period of time can be obtained by means of such as simulation or investigation, which will not be listed herein.

Referring to FIG. 7, which illustrates an application scenario of a voice control method according to an embodiment of the present invention. The vehicle terminal 100 includes a voice assistant module 104, an interaction module 102, and an offline engine module 106, as shown in FIG. 7. The server 200 may include a TTS (Text To Speech) server. The TTS server may be a server of a vehicle manufacturer, which includes but not limited to a server for performing natural language processing, processing request text data and synthesizing response audio files.

The voice assistant module 104 receives a user voice request from a user, obtains a voice command based on the user voice request, and sends the voice command to the interaction module 102.

The interaction module 102 obtains the voice command and uploads it to the TTS server.

The TTS server obtains the user's wishes through natural language processing, and generates request text data.

The TTS server processes the voice command to obtain the corresponding response audio file, and determines whether the request text data contains a preset keyword, and then returns latency data including a first adjustment value to the interaction module 102.

The TTS server determines whether the speed of the vehicle is less than the preset threshold, and then returns latency data including a second adjustment value to the interaction module 102.

The voice assistant module 104 sends a "Ping" request message to the TTS server at a preset frequency. Upon receiving the "Ping" request message, the TTS server sends a "Pong" response message to the voice assistant module 104. Network prediction is performed according to whether the voice assistant module 104 receives the "Pong" response message sent by the TTS server within a specified period of time, to obtain a prediction result.

The voice assistant module 104 determines the waiting period based on the latency data and the prediction result.

If a complete response audio file synthesized by the TTS server is received within the waiting period, the voice assistant module 104 plays the response audio file.

If the complete response audio file is not received when the waiting period elapsed, the voice assistant module 104 synthesizes a response audio file offline through the offline engine module 106 and plays it.

Upon completion of above processes, the method ends. The embodiment of the invention determines the latency data depending on the vehicle scene and then determines the waiting period based on the latency data and the prediction result, such that the time tolerance for the vehicle terminal 100 to receive data from the server 200 is improved for different vehicle scenes and network states. This reduces offline frequency in the case of a poor network condition and improves user experience.

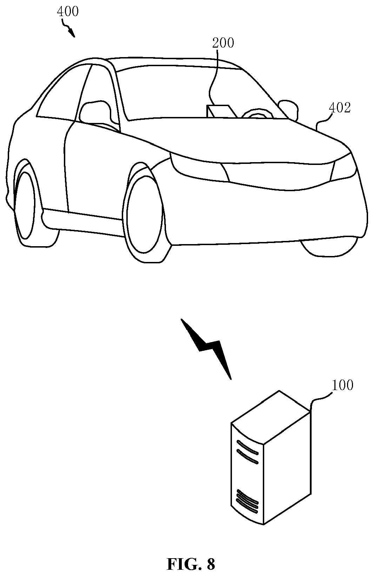

Referring to FIG. 8, the present invention provides a vehicle 400, which includes:
a vehicle body 402, and
a vehicle terminal 100 mounted on the vehicle body 200, the vehicle terminal 100 being configured to:
   acquire a voice command and transmit the voice command to a server 200, such that the server 200 processes the voice command to obtain a corresponding response audio file;
   receive latency data determined by the server 200 based on a vehicle 400 scene, wherein the latency data includes data indicating whether the vehicle terminal 100 needs to adjust a default waiting period for the response audio file and an adjustment value;
   perform network prediction to obtain a prediction result;
   determine a waiting period based on the latency data and the prediction result;
   perform a synthesis operation for the response audio file and play the synthesized response audio file, when complete data of the response audio file transmitted from the server 200 is not received within the waiting period;
   play the response audio file transmitted from the server 200 when the complete data of the response audio file transmitted from the server 200 is received within the waiting period.

The vehicle 400 performs network prediction to obtain a prediction result. After receiving the latency data determined based on the vehicle 400 scene by the server 200, the vehicle 400 determines, based on the latency data and the prediction result, the waiting period for a response audio file transmitted by the server 200. The time tolerance that the vehicle terminal 100 waits to receive the server 200 can be improved for different vehicle scenes and network states. The vehicle 400 can intervene in specific scenes, which enables service flexibility and dynamic adjustment of response latency of a response audio, thereby reducing offline frequency under poor network states and improving user experience.

The invention provides a server 200, which is configured to:
obtain a voice command transmitted from the vehicle terminal 100; process the voice command to obtain a corresponding response audio file; determine latency data based on a vehicle scene; and send the latency data to the vehicle terminal 100, such that the vehicle terminal 100 determines a waiting period based on the latency data and a prediction result from network prediction performed by the vehicle terminal 100, wherein the latency data includes data indicating whether the vehicle terminal 100 needs to adjust a default waiting period for the response audio file and an adjustment value;

The server 200 determines the latency data depending on the vehicle scene, so that the vehicle terminal 100 determines the waiting period based on the latency data and the prediction result from the network prediction performed by the vehicle terminal 100. Thus, the time tolerance for the vehicle terminal 100 to receive data from the server 200 can be improved for different vehicle scenes and network states. The server 200 can intervene in specific scenes, which enables service flexibility and dynamic adjustment of response latency of a response audio, thereby reducing offline frequency under poor network states and improving user experience.

The present invention provides a computer-readable storage medium having stored thereon a computer program that, when executed by a processor, implements any one of the embodiments of the voice control method.

The computer-readable storage medium may be located on the vehicle 400 or may be located on a server. The vehicle 400 can communicate with the server to obtain a corresponding program. It can be understood that the computer program include computer program codes. The computer program codes may be in the form of source codes, object codes, an executable file or some intermediate form, or the like. The computer-readable storage medium may include any entity or device capable of carrying computer program codes, a recording medium, a U disk, a removable hard disk, a magnetic disk, an optical disk, a computer memory, a Read-Only Memory (ROM), a Random-Access Memory (RAM), a software distribution medium, and the like.

The computer-readable storage medium may be any device that can contain, store, communicate, propagate, or transmit a program for use by an instruction execution system, apparatus, or device or in connection with the instruction execution system, apparatus, or device. More specific examples (a non-exhaustive list) of the computer-readable storage medium may include: an electrical connection (an electronic device) having one or more wires, a portable computer diskette (a magnetic device), a random access memory (RAM), a Read-Only Memory (ROM), an Erasable Programmable Read-Only Memory (EPROM or Flash memory), a fiber optic device, and a portable compact disc read-only memory (CDROM). In addition, the computer-readable storage medium could even be paper or other suitable medium upon which a program is printed, as the program can be electronically obtained, for example, by optical scanning of the paper or other medium, then compiled, interpreted or otherwise processed in a suitable manner if necessary, and then stored in a computer memory.

It will be appreciated that the above description of the embodiments and the benefits of the voice control method also applies to the vehicle 400, the server 200, and the computer-readable storage medium of the present invention, which will not be repeated herein to avoid redundancy.

In the description herein, specific features, structures, materials, or characteristics described in connection with terms such as "an embodiment," "some embodiments," "an example," "a specific example," or "some examples," etc. are intended to be comprised in at least one embodiment or example of the present invention. In this specification, references to the above terms are not necessarily intended to refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present invention includes additional embodiments, in which functions may be performed out of order from that illustrated or discussed herein, but may instead be performed in substantially the same way or in reverse order depending on the functionality involved.

While embodiments of the present invention have been illustrated and described above, it will be appreciated that the embodiments described above are illustrative and are not to be construed as limiting the invention. Variations, modifications, substitutions, and alterations of the embodiments described above may be made by one of ordinary skills in the art without departing from the scope of the present invention.

## Claims

1. A voice control method, **characterized by**:
acquiring and transmitting a voice command to a server (200) by a vehicle terminal (100) (S 10);
processing, by the server (200), the voice command to obtain a corresponding response audio file, determining latency data based on a vehicle scene, and sending the latency data to the vehicle terminal (100) (S20), wherein the latency data comprises data indicating whether the vehicle terminal (100) needs to adjust a default waiting period for the response audio file and an adjustment value;
performing, by the vehicle terminal (100), network prediction to obtain a prediction result (S40), wherein the vehicle terminal (100) performs the network prediction through a service heartbeat mechanism;
determining, by the vehicle terminal (100), a waiting period based on the latency data and the prediction result (S50);
performing, by the vehicle terminal (100), a synthesis operation for the response audio file and playing the synthesized response audio file, when complete data of the response audio file transmitted by the server (200) is not received within the waiting period (S60); and
playing, by the vehicle terminal (100), the response audio file transmitted from the server (200) when the complete data of the response audio file transmitted by the server (200) is received within the waiting period (S70).

2. The voice control method of claim 1, wherein said determining the latency data based on the vehicle scene and sending the latency data to the vehicle terminal (100) (S20) comprises:
processing, by the server (200), the voice command to obtain corresponding request text data (S31);
determining whether the request text data comprises a preset keyword;
when the request text data contains a preset keyword, determining by the server (200) that the vehicle scene is a time-insensitive scene, and determining the latency data as data indicating that the vehicle terminal (100) needs to adjust the default waiting period for the response audio file and a first adjustment value (S32); and
when the request text data does not contain a preset keyword, determining by the server (200) that the vehicle scene is a time-sensitive scene, and determining the latency data as data indicating that the vehicle terminal (100) does not need to adjust the default waiting period for the response audio file (S33).

3. The voice control method of claim 2, wherein said determining by the server (200) that the vehicle scene is a time-insensitive scene (S32) comprises determining a type of the time-insensitive scene based on the keyword, and said first adjustment value corresponds to the type of the time-insensitive scene.

4. The voice control method of claim 1 or 2, wherein said determining the latency data based on the vehicle scene and sending the latency data to the vehicle terminal (100) (S20) comprises:
determining, by the server (200), the vehicle scene based on a vehicle speed (S35);
when the vehicle speed is less than a preset threshold, determining by the server (200) that the vehicle scene is a time-insensitive scene, and determining the latency data as data indicating that the vehicle terminal (100) needs to adjust the default waiting period for the response audio file and a second adjustment value (S36); and
when the vehicle speed is not less than a preset threshold, determining by the server (200) that the vehicle scene is a time-sensitive scene, and determining the latency data as data indicating that the vehicle terminal (100) does not need to adjust the default waiting period for the response audio file (S37).

5. The voice control method of claim 4, further comprising determining an adjustment value for the latency data, wherein the adjustment value is set as:
the first adjustment value, if the second adjustment value is not present;
the second adjustment value, if the first adjustment value is not present;
a default value if neither the first adjustment value nor the second adjustment value is present; or
a calculation result of the first adjustment value and the second adjustment value if both the first adjustment value and the second adjustment value are present, wherein said calculation is selected from the following methods: addition, multiplication, averaging, finding max value, and finding min value.

6. The voice control method of claim 1, wherein the prediction result comprises a strong network state and a weak network state, and said determining the waiting period based on the latency data and the prediction result (S50) comprises:
determining, by the vehicle terminal (100), the waiting period as the default waiting period, in case of the strong network state (S51);
determining, by the vehicle terminal (100), the waiting period based on the latency data, in case of the weak network state and the latency data being data indicating that the vehicle terminal (100) needs to adjust the default waiting period for the response audio file and the adjustment value (S52); and
determining, by the vehicle terminal (100), the waiting period as the default waiting period, in case of the weak network state and the latency data indicating that the vehicle terminal (100) does not need to adjust the default waiting period for the response audio file (S53).

7. The voice control method of claim 1, further comprising:
processing, by the server (200), the voice command to obtain a natural language processing result, synthesizing the response audio file based on the natural language processing result and sending a synthesis start indicator to the vehicle terminal (100), and sending a synthesis completion indicator to the vehicle terminal (100) upon completion of the synthesis of the response audio file;
performing, by the vehicle terminal (100), the network prediction upon receipt of the synthesis start indicator;
determining, by the vehicle terminal (100), that the complete data of the response audio file transmitted by the server (200) is not received when the synthesis completion indicator is not received within the waiting period; and
determining, by the vehicle terminal (100), that the complete data of the response audio file transmitted by the server (200) is received when the synthesis completion indicator is received within the waiting period.

8. The voice control method of claim 1, wherein the vehicle terminal (100) performs the network prediction through the service heartbeat by:
sending, by the vehicle terminal (100), a request message to the server (200) at a preset frequency (S411);
determining, by the vehicle terminal (100), the prediction result as a weak network state when a response message sent by the server (200) is not received within a specified period of time (S413); and
determining, by the vehicle terminal (100), the prediction result as a strong network state when a response message sent by the server (200) is received within the specified period of time (S415).

9. A vehicle (400), **characterized by**:
a vehicle body (402); and
a vehicle terminal (100) mounted on the vehicle body (402) and configured to:
acquire a voice command and transmit the voice command to a server (200), such that the server (200) processes the voice command to obtain a corresponding response audio file;
receive latency data determined by the server (200) based on a vehicle scene, wherein the latency data comprises data indicating whether the vehicle terminal (100) needs to adjust a default waiting period for the response audio file and an adjustment value;
perform, through a service heartbeat mechanism, network prediction to obtain a prediction result;
determine a waiting period based on the latency data and the prediction result;
perform a synthesis operation for the response audio file and play the synthesized response audio file, when complete data of the response audio file transmitted by the server (200) is not received within the waiting period; and
play the response audio file transmitted from the server (200) when the complete data of the response audio file transmitted by the server (200) is received within the waiting period.

10. A server (200), **characterized in that** the server (200) is configured to:
obtain a voice command transmitted from a vehicle terminal (100);
process the voice command to obtain a corresponding response audio file; and
determine latency data based on a vehicle scene and send the latency data to the vehicle terminal (100), such that the vehicle terminal (100) determines a waiting period based on the latency data and a prediction result from network prediction performed by the vehicle terminal (100) through a service heartbeat mechanism, wherein the latency data comprises data indicating whether the vehicle terminal (100) needs to adjust a default waiting period for the response audio file and an adjustment value.

11. A computer-readable storage medium having stored thereon a computer program which, when executed by a processor, implements the steps of the voice control method of any one of claims 1-8.

## Patentansprüche

1. Sprachsteuerungsverfahren, **gekennzeichnet durch**:
Erfassen und Übertragen eines Sprachbefehls an einen Server (200) durch ein Fahrzeugendgerät (100) (S10);
Verarbeiten des Sprachbefehls durch den Server (200), um eine entsprechende Antwortaudiodatei zu erhalten, Bestimmen von Latenzdaten basierend auf einer Fahrzeugszene und Senden der Latenzdaten an das Fahrzeugendgerät (100) (S20), wobei die Latenzdaten Daten umfassen, die anzeigen, ob das Fahrzeugendgerät (100) eine Standardwartezeit für die Antwortaudiodatei anzupassen hat, und einen Anpassungswert anzeigen;
Durchführen einer Netzprognose durch das Fahrzeugendgerät (100), um ein Prognoseergebnis zu erhalten (S40), wobei das Fahrzeugendgerät (100) die Netzprognose durch einen Dienst-Heartbeat-Mechanismus durchführt;
Bestimmen einer Wartezeit durch das Fahrzeugendgerät (100) basierend auf den Latenzdaten und dem Prognoseergebnis (S50);
Durchführen eines Synthesevorgangs für die Antwortaudiodatei durch das Fahrzeugendgerät (100) und Wiedergeben der synthetisierten Antwortaudiodatei, wenn keine vollständigen Daten der durch den Server (200) übertragenen Antwortaudiodatei innerhalb der Wartezeit empfangen werden (S60); und
Wiedergeben der von dem Server (200) übertragenen Antwortaudiodatei durch das Fahrzeugendgerät (100), wenn die vollständigen Daten der durch den Server (200) übertragenen Antwortaudiodatei innerhalb der Wartezeit empfangen werden (S70).

2. Sprachsteuerungsverfahren nach Anspruch 1, wobei das Bestimmen der Latenzdaten basierend auf der Fahrzeugszene und das Senden der Latenzdaten an das Fahrzeugendgerät (100) (S20) Folgendes umfassen:
Verarbeiten des Sprachbefehls durch den Server (200), um entsprechende Anforderungstextdaten zu erhalten (S31);
Bestimmen, ob die Anforderungstextdaten ein vorgegebenes Schlüsselwort umfassen;
wenn die Anforderungstextdaten ein vorgegebenes Schlüsselwort enthalten, Bestimmen durch den Server (200), dass die Fahrzeugszene eine nicht zeitsensible Szene ist, und Bestimmen der Latenzdaten als Daten, die anzeigen, dass das Fahrzeugendgerät (100) die Standardwartezeit für die Antwortaudiodatei anzupassen hat, und einen ersten Anpassungswert anzeigen (S32); und,
wenn die Anforderungstextdaten kein vorgegebenes Schlüsselwort enthalten, Bestimmen durch den Server (200), dass die Fahrzeugszene eine zeitsensible Szene ist, und Bestimmen der Latenzdaten als Daten, die anzeigen, dass das Fahrzeugendgerät (100) die Standardwartezeit für die Antwortaudiodatei nicht anzupassen hat (S33).

3. Sprachsteuerungsverfahren nach Anspruch 2, wobei das Bestimmen durch den Server (200), dass die Fahrzeugszene eine nicht zeitsensible Szene ist (S32), das Bestimmen eines Typs der nicht zeitsensiblen Szene basierend auf dem Schlüsselwort umfasst und der erste Anpassungswert dem Typ der nicht zeitsensiblen Szene entspricht.

4. Sprachsteuerungsverfahren nach Anspruch 1 oder 2, wobei das Bestimmen der Latenzdaten basierend auf der Fahrzeugszene und das Senden der Latenzdaten an das Fahrzeugendgerät (100) (S20) Folgendes umfassen:
Bestimmen der Fahrzeugszene durch den Server (200) basierend auf einer Fahrzeuggeschwindigkeit (S35);
wenn die Fahrzeuggeschwindigkeit einen vorgegebenen Schwellenwert unterschreitet, Bestimmen durch den Server (200), dass die Fahrzeugszene eine nicht zeitsensible Szene ist, und Bestimmen der Latenzdaten als Daten, die anzeigen, dass das Fahrzeugendgerät (100) die Standardwartezeit für die Antwortaudiodatei anzupassen hat, und einen zweiten Anpassungswert anzeigen (S36); und,
wenn die Fahrzeuggeschwindigkeit einen vorgegebenen Schwellenwert nicht unterschreitet, Bestimmen durch den Server (200), dass die Fahrzeugszene eine zeitsensible Szene ist, und Bestimmen der Latenzdaten als Daten, die anzeigen, dass das Fahrzeugendgerät (100) die Standardwartezeit für die Antwortaudiodatei nicht anzupassen hat (S37).

5. Sprachsteuerungsverfahren nach Anspruch 4, das ferner das Bestimmen eines Anpassungswerts für die Latenzdaten umfasst, wobei der Anpassungswert gesetzt wird als:
der erste Anpassungswert, wenn der zweite Anpassungswert nicht vorliegt;
der zweite Anpassungswert, wenn der erste Anpassungswert nicht vorliegt;
ein Standardwert, wenn weder der erste Anpassungswert noch der zweite Anpassungswert vorliegt; oder
ein Berechnungsergebnis aus dem ersten Anpassungswert und dem zweiten Anpassungswert, wenn sowohl der erste Anpassungswert als auch der zweite Anpassungswert vorliegen, wobei die Berechnung aus den folgenden Verfahren ausgewählt wird: Addition, Multiplikation, Mittelwertbildung, Ermitteln des Maximalwerts und Ermitteln des Minimalwerts.

6. Sprachsteuerungsverfahren nach Anspruch 1, wobei das Prognoseergebnis einen starken Netzzustand und einen schwachen Netzzustand umfasst und das Bestimmen der Wartezeit basierend auf den Latenzdaten und dem Prognoseergebnis (S50) Folgendes umfasst:
Bestimmen der Wartezeit durch das Fahrzeugendgerät (100) als die Standardwartezeit im Fall des starken Netzzustands (S51);
Bestimmen der Wartezeit durch das Fahrzeugendgerät (100) basierend auf den Latenzdaten im Fall des schwachen Netzzustands, wobei die Latenzdaten Daten sind, die anzeigen, dass das Fahrzeugendgerät (100) die Standardwartezeit für die Antwortaudiodatei anzupassen hat, und den Anpassungswert anzeigen (S52); und
Bestimmen der Wartezeit durch das Fahrzeugendgerät (100) als die Standardwartezeit im Fall des schwachen Netzzustands, wobei die Latenzdaten anzeigen, dass das Fahrzeugendgerät (100) die Standardwartezeit für die Antwortaudiodatei nicht anzupassen hat (S53).

7. Sprachsteuerungsverfahren nach Anspruch 1, das ferner Folgendes umfasst:
Verarbeiten des Sprachbefehls durch den Server (200), um ein Ergebnis einer Verarbeitung natürlicher Sprache zu erhalten, Synthetisieren der Antwortaudiodatei basierend auf dem Ergebnis einer Verarbeitung natürlicher Sprache und Senden einer Synthesebeginnanzeige an das Fahrzeugendgerät (100) und Senden einer Synthesebeendigungsanzeige an das Fahrzeugendgerät (100) nach der Beendigung der Synthese der Antwortaudiodatei;
Durchführen der Netzprognose durch das Fahrzeugendgerät (100) nach dem Empfang der Synthesebeginnanzeige;
Bestimmen durch das Fahrzeugendgerät (100), dass die vollständigen Daten der durch den Server (200) übertragenen Antwortaudiodatei nicht empfangen werden, wenn die Synthesebeendigungsanzeige nicht innerhalb der Wartezeit empfangen wird; und
Bestimmen durch das Fahrzeugendgerät (100), dass die vollständigen Daten der durch den Server (200) übertragenen Antwortaudiodatei empfangen werden, wenn die Synthesebeendigungsanzeige innerhalb der Wartezeit empfangen wird.

8. Sprachsteuerungsverfahren nach Anspruch 1, wobei das Fahrzeugendgerät (100) die Netzprognose durch den Dienst-Heartbeat durch Folgendes durchführt:
Senden einer Anforderungsnachricht durch das Fahrzeugendgerät (100) an den Server (200) bei einer vorgegebenen Frequenz (S411);
Bestimmen des Prognoseergebnisses durch das Fahrzeugendgerät (100) als einen schwachen Netzzustand, wenn eine durch den Server (200) gesendete Antwortnachricht nicht innerhalb eines festgelegten Zeitraums empfangen wird (S413); und
Bestimmen des Prognoseergebnisses durch das Fahrzeugendgerät (100) als einen starken Netzzustand, wenn eine durch den Server (200) gesendete Antwortnachricht innerhalb des festgelegten Zeitraums empfangen wird (S415).

9. Fahrzeug (400), **gekennzeichnet durch**:
eine Fahrzeugkarosserie (402); und
ein Fahrzeugendgerät (100), das auf der Fahrzeugkarosserie (402) montiert und für Folgendes konfiguriert ist:
Erfassen eines Sprachbefehls und Übertragen des Sprachbefehls an einen Server (200), damit der Server (200) den Sprachbefehl verarbeitet, um eine entsprechende Antwortaudiodatei zu erhalten;
Empfangen von durch den Server (200) basierend auf einer Fahrzeugszene bestimmten Latenzdaten, wobei die Latenzdaten Daten umfassen, die anzeigen, ob das Fahrzeugendgerät (100) eine Standardwartezeit für die Antwortaudiodatei anzupassen hat, und einen Anpassungswert anzeigen;
Durchführen einer Netzprognose durch einen Dienst-Heartbeat-Mechanismus, um ein Prognoseergebnis zu erhalten;
Bestimmen einer Wartezeit basierend auf den Latenzdaten und dem Prognoseergebnis;
Durchführen eines Synthesevorgangs für die Antwortaudiodatei und Wiedergeben der synthetisierten Antwortaudiodatei, wenn keine vollständigen Daten der durch den Server (200) übertragenen Antwortaudiodatei innerhalb der Wartezeit empfangen werden; und
Wiedergeben der von dem Server (200) übertragenen Antwortaudiodatei, wenn die vollständigen Daten der durch den Server (200) übertragenen Antwortaudiodatei innerhalb der Wartezeit empfangen werden.

10. Server (200), **dadurch gekennzeichnet, dass** der Server (200) für Folgendes konfiguriert ist:
Erhalten eines von einem Fahrzeugendgerät (100) übertragenen Sprachbefehls;
Verarbeiten des Sprachbefehls, um eine entsprechende Antwortaudiodatei zu erhalten; und
Bestimmen von Latenzdaten basierend auf einer Fahrzeugszene und Senden der Latenzdaten an das Fahrzeugendgerät (100), damit das Fahrzeugendgerät (100) basierend auf den Latenzdaten und einem Prognoseergebnis aus einer durch das Fahrzeugendgerät (100) durch einen Dienst-Heartbeat-Mechanismus durchgeführten Netzprognose eine Wartezeit bestimmt, wobei die Latenzdaten Daten umfassen, die anzeigen, ob das Fahrzeugendgerät (100) eine Standardwartezeit für die Antwortaudiodatei anzupassen hat, und einen Anpassungswert anzeigen.

11. Computerlesbares Speichermedium, in dem ein Computerprogramm gespeichert ist, das, wenn es von einem Prozessor ausgeführt wird, die Schritte des Sprachsteuerungsverfahrens nach einem der Ansprüche 1-8 implementiert.

## Revendications

1. Procédé de commande vocale, **caractérisé par** :
une acquisition et une transmission d'une commande vocale vers un serveur (200) par un terminal de véhicule (100) (S10) ;
un traitement, par le serveur (200), de la commande vocale pour obtenir un fichier audio de réponse correspondant, une détermination de données de latence sur la base d'une scène de véhicule, et un envoi des données de latence au terminal de véhicule (100) (S20), dans lequel les données de latence comprennent des données indiquant si le terminal de véhicule (100) nécessite un ajustement d'une période d'attente par défaut pour le fichier audio de réponse et une valeur d'ajustement ;
une réalisation, par le terminal de véhicule (100), d'une prédiction de réseau pour obtenir un résultat de prédiction (S40), dans lequel le terminal de véhicule (100) réalise la prédiction de réseau par le biais d'un mécanisme heartbeat de service ;
une détermination, par le terminal de véhicule (100), d'une période d'attente sur la base des données de latence et du résultat de prédiction (S50) ;
une réalisation, par le terminal de véhicule (100), d'une opération de synthèse pour le fichier audio de réponse et une lecture du fichier audio de réponse synthétisé, lorsque des données complètes du fichier audio de réponse transmis par le serveur (200) ne sont pas reçues pendant la période d'attente (S60) ; et
une lecture, par le terminal de véhicule (100), du fichier audio de réponse transmis à partir du serveur (200) lorsque les données complètes du fichier audio de réponse transmis par le serveur (200) sont reçues pendant la période d'attente (S70).

2. Procédé de commande vocale selon la revendication 1, dans lequel ladite détermination des données de latence sur la base de la scène de véhicule et un envoi des données de latence au terminal de véhicule (100) (S20) comprend :
un traitement, par le serveur (200), de la commande vocale pour obtenir des données textuelles de demande correspondantes (S31) ;
une détermination du fait que les données textuelles de demande comprennent ou non un mot clé prédéfini ;
lorsque les données textuelles de demande contiennent un mot clé prédéfini, une détermination par le serveur (200) du fait que la scène de véhicule est une scène sans urgence temporelle, et une détermination des données de latence à titre de données indiquant que le terminal de véhicule (100) nécessite un ajustement de la période d'attente par défaut pour le fichier audio de réponse et une première valeur d'ajustement (S32) ; et
lorsque les données textuelles de demande ne contiennent pas un mot clé prédéfini, une détermination par le serveur (200) du fait que la scène de véhicule est une scène à caractère urgent, et une détermination des données de latence à titre de données indiquant que le terminal de véhicule (100) ne nécessite pas d'ajustement de la période d'attente par défaut pour le fichier audio de réponse (S33).

3. Procédé de commande vocale selon la revendication 2, dans lequel ladite détermination par le serveur (200) du fait que la scène de véhicule est une scène sans urgence temporelle (S32) comprend une détermination d'un type de la scène sans urgence temporelle sur la base du mot clé, et ladite première valeur d'ajustement correspond au type de la scène sans urgence temporelle.

4. Procédé de commande vocale selon la revendication 1 ou 2, dans lequel ladite détermination des données de latence sur la base de la scène de véhicule et un envoi des données de latence au terminal de véhicule (100) (S20) comprend :
une détermination, par le serveur (200), de la scène de véhicule sur la base d'une vitesse de véhicule (S35) ;
lorsque la vitesse de véhicule est inférieure à un seuil prédéfini, une détermination par le serveur (200) du fait que la scène de véhicule est une scène sans urgence temporelle, et une détermination des données de latence à titre de données indiquant que le terminal de véhicule (100) nécessite un ajustement de la période d'attente par défaut pour le fichier audio de réponse et une seconde valeur d'ajustement (S36) ; et
lorsque la vitesse de véhicule n'est pas inférieure à un seuil prédéfini, une détermination par le serveur (200) du fait que la scène de véhicule est une scène à caractère urgent, et une détermination des données de latence à titre de données indiquant que le terminal de véhicule (100) ne nécessite pas d'ajustement de la période d'attente par défaut pour le fichier audio de réponse (S37).

5. Procédé de commande vocale selon la revendication 4, comprenant en outre une détermination d'une valeur d'ajustement pour les données de latence, dans lequel la valeur d'ajustement est définie comme :
la première valeur d'ajustement, si la seconde valeur d'ajustement n'est pas présente ;
la seconde valeur d'ajustement, si la première valeur d'ajustement n'est pas présente ;
une valeur par défaut si ni la première valeur d'ajustement ni la seconde valeur d'ajustement n'est présente ; ou
un résultat de calcul de la première valeur d'ajustement et de la seconde valeur d'ajustement si la première valeur d'ajustement et la seconde valeur d'ajustement sont toutes les deux présentes, dans lequel ledit calcul est sélectionné parmi les procédés suivants : une addition, une multiplication, une réalisation de moyenne, une recherche de valeur maximum, et une recherche de valeur minimum.

6. Procédé de commande vocale selon la revendication 1, dans lequel le résultat de prédiction comprend un état de réseau fort et un état de réseau faible, et ladite détermination de la période d'attente sur la base des données de latence et du résultat de prédiction (S50) comprend :
une détermination, par le terminal de véhicule (100), de la période d'attente à titre de période d'attente par défaut, dans le cas d'un état de réseau fort (S51) ;
une détermination, par le terminal de véhicule (100), de la période d'attente sur la base des données de latence, dans le cas de l'état de réseau faible et les données de latence étant des données indiquant que le terminal de véhicule (100) nécessite un ajustement de la période d'attente par défaut pour le fichier audio de réponse et la valeur d'ajustement (S52) ; et
une détermination, par le terminal de véhicule (100), de la période d'attente à titre de période d'attente par défaut, dans le cas de l'état de réseau faible et les données de latence indiquant que le terminal de véhicule (100) ne nécessite pas d'ajustement de la période d'attente par défaut pour le fichier audio de réponse (S53).

7. Dispositif de commande vocale selon la revendication 1, comprenant en outre :
un traitement, par le serveur (200), de la commande vocale pour obtenir un résultat de traitement de langage naturel, une réalisation de la synthèse du fichier audio de réponse sur la base du résultat de traitement de langage naturel et un envoi d'un indicateur de début de synthèse au terminal de véhicule (100), et un envoi d'un indicateur de finalisation de synthèse au terminal de véhicule (100) lors de la finalisation de la synthèse du fichier audio de réponse ;
une réalisation, par le terminal de véhicule (100), de la prédiction de réseau lors d'une réception de l'indicateur de début de synthèse ;
une détermination, par le terminal de véhicule (100), du fait que les données complètes du fichier audio de réponse transmis par le serveur (200) ne sont pas reçues lorsque l'indicateur de finalisation de synthèse n'est pas reçu pendant la période d'attente ; et
une détermination, par le terminal de véhicule (100), du fait que les données complètes du fichier audio de réponse transmis par le serveur (200) sont reçues lorsque l'indicateur de finalisation de synthèse est reçu pendant la période d'attente.

8. Procédé de commande vocale selon la revendication 1, dans lequel le terminal de véhicule (100) réalise la prédiction de réseau par le biais du heartbeat de service :
en envoyant, par le terminal de véhicule (100), un message de demande au serveur (200) à une fréquence prédéfinie (S411) ;
en déterminant, par le terminal de véhicule (100), le résultat de prédiction à titre d'état de réseau faible lorsqu'un message de réponse envoyé par le serveur (200) n'est pas reçu pendant une période de temps spécifiée (S413) ; et
en déterminant, par le terminal de véhicule (100), le résultat de prédiction à titre d'état de réseau fort lorsqu'un message de réponse envoyé par le serveur (200) est reçu pendant la période de temps spécifiée (S415).

9. Véhicule (400), **caractérisé par** :
un corps de véhicule (402) ; et
un terminal de véhicule (100) monté sur le corps de véhicule (402) et configuré pour :
une acquisition d'une commande vocale et une transmission de la commande vocale au serveur (200), de sorte que le serveur (200) traite la commande vocale pour obtenir un fichier audio de réponse correspondant ;
une réception de données de latence déterminées par le serveur (200) sur la base d'une scène de véhicule, dans lequel les données de latence comprennent des données indiquant le fait que le terminal de véhicule (100) nécessite ou non un ajustement d'une période d'attente par défaut pour le fichier audio de réponse et une valeur d'ajustement ;
une réalisation, par le biais d'un mécanisme hearbeat de service, d'une prédiction de réseau pour obtenir un résultat de prédiction ;
une détermination d'une période d'attente sur la base des données de latence et du résultat de prédiction ;
une réalisation d'une opération de synthèse pour le fichier audio de réponse et une lecture du fichier audio de réponse synthétisé, lorsque des données complètes du fichier audio de réponse transmis par le serveur (200) ne sont pas reçues pendant la période d'attente ; et
une lecture du fichier audio de réponse transmis à partir du serveur (200) lorsque les données complètes du fichier audio de réponse transmis par le serveur (200) sont reçues pendant la période d'attente.

10. Serveur (200), **caractérisé en ce que** le serveur (200) est configuré pour :
une obtention d'une commande vocale transmise à partir d'un terminal de véhicule (100) ;
un traitement de la commande vocale pour obtenir un fichier audio de réponse correspondant ; et
une détermination de données de latence sur la base d'une scène de véhicule et un envoi des données de latence au terminal de véhicule (100), de sorte que le terminal de véhicule (100) détermine une période d'attente sur la base des données de latence et d'un résultat de prédiction à partir d'une prédiction de réseau réalisée par le terminal de véhicule (100) par le biais d'un mécanisme heartbeat de service, dans lequel les données de latence comprennent des données indiquant si le terminal de véhicule (100) nécessite ou non un ajustement d'une période d'attente par défaut pour le fichier audio de réponse et une valeur d'ajustement.

11. Support de stockage lisible par ordinateur présentant stocké dessus un programme d'ordinateur, qui lorsqu'il est exécuté par un processeur, met en oeuvre les étapes du procédé de commande vocale selon l'une quelconque des revendications 1 à 8.
